# NEUE EUROPÄISCHE PATENTSCHRIFT

(11) **EP 1 516 301 B2**
(45) Veröffentlichungstag und Bekanntmachung des Hinweises auf die Entscheidung über den Einspruch: **04.10.2017**
(45) Hinweis auf die Patenterteilung: 20.02.2008
(21) Anmeldenummer: 03756948.0
(22) Anmeldetag: 26.05.2003
(51) Int. Cl.: G08G 1/16

(54) **VERFAHREN UND VORRICHTUNG ZUR FAHRERINFORMATION BZW. ZUR REAKTION BEI VERLASSEN DER FAHRSPUR**
METHOD AND DEVICE FOR DRIVER INFORMATION AND TO REACT TO LEAVING THE LANE
PROCÉDÉ ET DISPOSITIF POUR INFORMER UN CONDUCTEUR OU INTERVENIR SUR UN CONDUCTEUR DEVIANT DE SA TRAJECTOIRE SUR UNE VOIE DE CIRCULATION

(30) Priorität: 11.06.2002 DE 10225952; 21.08.2002 DE 10238215
(43) Veröffentlichungstag der Anmeldung: 23.03.2005
(73) Patentinhaber: ROBERT BOSCH GMBH, 70442 Stuttgart (DE)
(72) Erfinder: MAASS, Alexander, 71229 Leonberg (DE); HECKEL, Joerg, 71277 Rutesheim (DE)
(86) Internationale Anmeldenummer: PCT/DE2003/001685
(87) Internationale Veröffentlichungsnummer: WO 2003/105108

(56) Entgegenhaltungen:
- EP-A- 1 074 430
- EP-A1- 0 640 903
- WO-A-00/54008
- US-A- 4 348 652
- US-A- 5 225 827
- US-A- 5 521 579
- US-A- 5 982 278
- US-A- 6 057 754

## Beschreibung

### Stand der Technik

Die Erfindung betrifft ein Verfahren und eine Vorrichtung zur Fahrerinformation bzw. zur Reaktion bei Verlassen der Fahrspur, genauer bei zu erwartendem Verlassen der Fahrspur.

Warnsysteme, welchen den Fahrer bei Verlassen der Fahrspur bzw. bei drohendem Verlassen der Fahrspur warnen, sind im Stand der Technik bekannt. Beispielsweise zeigt die EP 1074430 A1 eine Vorgehensweise, bei welcher aufgrund von Bildsensorsystemen die Fahrspur, auf der sich ein Fahrzeug bewegt, ermittelt wird und der Fahrer gewarnt wird, wenn das Fahrzeug diese Fahrspur verlässt bzw. zu verlassen droht. Hinweise auf die genauen Randbedingungen, unter denen eine derartige Warnung erfolgt, werden nicht angegeben. Insbesondere wird nicht die jeweilige Fahrsituation berücksichtigt, so dass es für den Fahrer zu unangenehmen Fehlwarnungen kommen kann.

Aus der DE 196 37 053 A1 ist bekannt, mittels eines winkelauflösenden Abstands- und Geschwindigkeitssensors, vorzugsweise eines Radar- oder Lasersensors, Objekte auf einer Nebenfahrbahn zu erkennen und anhand der Relativgeschwindigkeit dieser Objekte deren Fahrrichtung zu ermitteln.

Die WO 00/54008 A zeigt eine Vorgehensweise zur Fahrerwarnung bzw. zur Querführung eines Fahrzeugs bei Verlassen der Fahrspur. Grundlage zur Feststellung, ob die Fahrspur verlassen wird oder nicht, ist ein GPS-Signal. Zur Unfallvermeidung mit anderen Fahrzeugen wird eine Fahrzeug-Fahrzeug-Kommunikation eingesetzt, mittels derer Position, Richtung und Geschwindigkeit des Fahrzeugs übermittelt wird.

Das US-Patent US 5,982,278 A zeigt ein Fahrerwarnsystem bei Verlassen der Fahrspur, wobei zwischen durchgezogenen und gestrichelten Fahrbahnmarkierungen unterschieden wird Eine Warnung erfolgt dabei nur, wenn das Fahrzeug eine durchgezogene Linie überfährt.

### Vorteile der Erfindung

Durch die Berücksichtigung der Fahrsituation für das Auslösen der Warnung bzw. des Fahrzeugeingriffs (Reaktion) bei Verlassen der Fahrspur werden Fehlwarnungen oder fehlerhafte Reaktionen wirksam vermieden. Warnungen des Fahrers bzw. Reaktionen zum Vermeiden des Verlassens der Fahrspur erfolgen daher nur bei relativ sicher erkannter Gefahrensituation. Durch die beschriebene Maßnahme wird also der Nutzen und die Akzeptanz eines entsprechenden Systems wesentlich erhöht.

In erfinderischer Weise wird die Fahrsituation anhand der Art der Fahrbahnmarkierungen und/oder der Art des Verkehrs auf der Nebenfahrbahn erkannt, in deren Richtung ein Verlassen der Fahrspur anzunehmen ist. In einer konkreten Anwendung wird bei Erkennen einer gestrichelte Linie als Fahrbahnmarkierung keine Warnung oder eine unauffälligere Warnung bzw. kein Fahrzeugeingriff vorgenommen. In einer anderen Anwendung wird eine Nachbarspur für Verkehr in gleicher Fahrtrichtung als eine Fahrsituation angesehen, in der eine Warnung bzw. eine Reaktion bei Verlassen der Fahrspur unerwünscht sein kann, somit eine Unterdrückung der Warnung bzw. Reaktion erfolgt oder eine unauffälligere Warnung erzeugt wird. Im Gegensatz dazu dürfte bei Erkennen einer durchgezogenen Linie oder bei einer Nachbarfahrspur für Verkehr in Gegenrichtung bei Verlassen bzw. drohendem Verlassen der Fahrspur eine Gefahrensituation mit hoher Wahrscheinlichkeit vorhanden sein, so dass in einer solchen Situation eine Warnung und/oder eine Reaktion sinnvoll ist. Wenn das Fahrzeug eine Linie überfährt in Richtung einer Spur, die z.B. von Informationen eines Navigationssystems als Standspur bekannt ist, kann die Warnung verzögert oder mit geringerer Intensität vorgenommen werden.

Vorteilhaft ist auch eine Kombination der Kriterien der Art der Fahrbahnmarkierung und der Art der Verkehrssituation auf der Nachbarfahrspur. In diesem Fall wird bei gestrichelter Linie und bei einer Nachbarfahrspur für Verkehr in Fahrtrichtung die Warnung bzw. Reaktion unterdrückt oder eine unauffälligere Warnung erzeugt, während bei gestrichelter Linie und bei einer Nachbarfahrspur für Verkehr in Gegenrichtung sowie bei durchgezogenen Markierungen eine Warnung bzw. eine Reaktion erfolgt.

In besonders vorteilhafter Weise werden die Informationen, die zur Ableitung der Fahrsituation führen, aus Bildsensorsignalen, ggf. ergänzend aus Abstandssensorsignalen oder aus Informationen eines Navigationssystems ermittelt. Durch die Verwendung ohnehin vorhandener Sensoren und Informationen wird der Aufwand zur Realisierung der beschriebenen Vorgehensweise verringert.

In alternativer Weise kann durch Verwendung von Sensorik, die sowohl nach vorne als auch nach hinten und/oder seitlich Informationen bezüglich vorhandener Objekte ermittelt, die Genauigkeit der Warnung bzw. Reaktion weiter erhöht werden. In diesem Fall erfolgt eine Warnung bzw. eine Reaktion dann, wenn die Fahrspur verlassen wird bzw. ein Verlassen der Fahrspur droht und, gegebenenfalls bei erkannten gestrichelten Markierungslinien, im Umfeld des Fahrzeugs sich auf der Nachbarspur tatsächlich Objekte, befinden, die sich insbesondere in gleicher Fahrtrichtung bewegen.

Weitere Vorteile ergeben sich aus der nachfolgenden Beschreibung von Ausführungsbeispielen bzw. aus den abhängigen Patentansprüchen..

### Zeichnung

Die Erfindung wird nachstehend anhand der in der Zeichnung dargestellten Ausführungsformen näher erläutert.
Figur 1 zeigt dabei ein Blockschaltbild einer Vorrichtung zur Fahrerwarnung bzw. zur Reaktion bei drohendem Verlassen der Fahrspur durch das Fahrzeug.
In Figur 2 ist ein Flussdiagramm skizziert, in welchem eine bevorzugte Vorgehensweise zur Auslösung der Fahrerwarnung dargestellt ist. Diese Vorgehensweise ist anhand der Skizze der Figur 3 verdeutlicht.

### Beschreibung von Ausführungsbeispielen

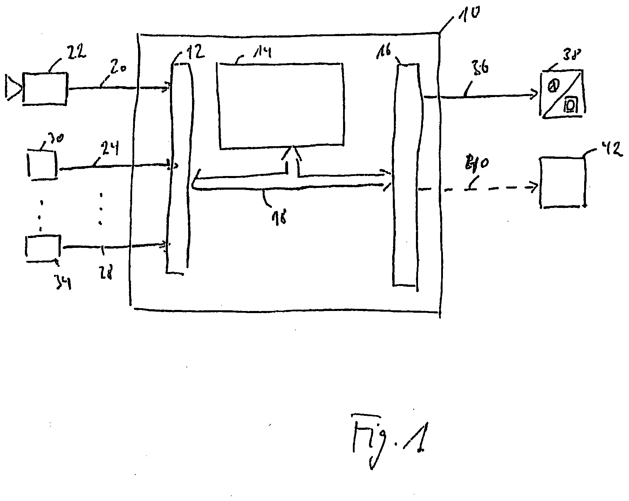

Figur 1 zeigt eine Vorrichtung, welche zur Warnung des Fahrers bzw. zur Reaktion bei zukünftigem Verlassen der Fahrspur des Fahrzeugs dient. Gezeigt ist eine Steuer- bzw. Auswerteeinheit 10, welche eine Eingangsschaltung 12, einen Mikrocomputer 14 sowie eine Ausgangsschaltung 16 aufweist. Diese Elemente sind mit einem Bussystem zum gegenseitigen Datenaustausch miteinander verbunden. Der Eingangsschaltung 12 werden Eingangsleitungen von verschiedenen Messeinrichtungen zugeführt, über die Messsignale bzw. Messinformationen übermittelt werden. Eine erste Eingangsleitung 20 verbindet die Eingangsschaltung 12 mit einem Bildsensorsystem 22, welches die Szene vor dem Fahrzeug aufnimmt. Entsprechende Bilddaten werden über die Eingangsleitung 20 übermittelt. Ferner sind Eingangsleitungen 24 bis 28 vorgesehen, welche die Eingangsschaltung 12 mit Messeinrichtungen 30 bis 34 verbinden. Bei diesen Messeinrichtungen handelt es sich beispielsweise um Messeinrichtungen zur Messung der Fahrzeuggeschwindigkeit, zur Erfassung des Lenkwinkels, sowie zur Erfassung weiterer Betriebsgrößen des Fahrzeugs, welche im Zusammenhang mit der nachfolgend beschriebenen Vorgehensweise Bedeutung haben. Über die Ausgangsschaltung 16 und die Ausgangsleitung 36 wird wenigstens eine Warneinrichtung 38 angesteuert, beispielsweise eine Warnlampe und/oder ein Lautsprecher für eine akustische Warnung oder für eine Sprachausgabe und/oder ein Display für die Anzeige eines Bildes, mit deren Hilfe der Fahrer vor dem zu befürchtenden Verlassen der Fahrspur nach Maßgabe der nachfolgend dargestellten Vorgehensweise informiert bzw. gewarnt wird. Darüber hinaus oder alternativ dazu ist in einigen Ausführungsbeispielen vorgesehen, über die Ausgangsschaltung 16 und eine Ausgangsleitung 40 ein Stellsystem 42 anzusteuern, welches automatisch beispielsweise durch Eingriff in die Lenkung des Fahrzeugs das Fahrzeug wieder in die Spur zurückführt und so das Verlassen der Fahrspur verhindert.

Im bevorzugten Ausführungsbeispiel erfolgt die Erkennung der Fahrspurmarkierungen mit einem Bildsensorsystem, vorzugsweise einem Kamerasystem. Durch Analyse der aufgenommenen Bilder, insbesondere anhand der Grauwerteverteilung, wird durch eine Bildauswerteeinheit Randmarkierungen erkannt, deren Verlauf als mathematische Funktion ermittelt und unterschieden, ob gestrichelte oder durchgezogene Linien vorliegen. Das Bildsensorsystem dient in einer Ausführung ferner auch dazu, Objekte in der Umgebung der Fahrspur des Fahrzeugs, somit auch auf Nachbarfahrspuren (links oder rechts) zu beobachten. Dabei werden wie oben übliche Objekterkennungsmethoden eingesetzt. Anhand aufeinanderfolgender Aufnahmen und der Eigengeschwindigkeit des Fahrzeugs lässt sich aufgrund dieser Informationen ermitteln, ob ein erkanntes Objekt auf einer Nachbarfahrspur in gleicher Fahrrichtung oder in entgegengesetzter Fahrrichtung fährt. Auf diese Weise lässt sich die Fahrsituation (Markierungsart und/oder Art der Nachbarfahrbahn und/oder Verkehrsituation) erfassen. Anstelle des Bildsensorsystems werden in anderen Ausführungen andere Sensoren zur Fahrsituationserfassung eingesetzt, beispielsweise Radarsensoren, Lasersensoren, etc. Ferner sind in anderen Ausführungen Sensoren vorhanden, die rund um das Fahrzeug herum Objekte erkennen und die Abstände zu diesen Objekten ermitteln. In diesen Fällen lässt sich nicht nur die Fahrtrichtung auf einer Nachbarfahrbahn ermitteln, sondern das tatsächliche Vorhandensein von Fahrzeugen und deren Bewegungsrichtung auf der Nachbarspur erkennen.

Aufgrund der Informationen über wenigstens eine Fahrbahnrandmarkierung, deren Verlauf als mathematische Funktion dargestellt wird, sowie der beispielsweise aufgrund von Lenkwinkel, etc. ermittelten zukünftigen Trajektorie des Eigenfahrzeugs wird bei Schneiden oder unzulässigem Annähern dieser beiden Funktionen ein zu erwartendes Verlassen der Fahrspur bestimmt. Ist dies der Fall und liegt eine Fahrsituation vor, bei von einem erhöhten Gefahrenpotential bei Verlassen der Fahrspur auszugehen ist, wird eine Warnung an den Fahrer, akustisch und/oder optisch und/oder haptisch ausgegeben, bzw. durch gezielten Eingriff in den Kurs des Fahrzeugs, beispielsweise durch Lenkeingriff, eine Korrektur des Kurses vorgenommen. Die Warnung ist dabei deutlich, z.B. laute Töne, Einblenden eines großen, ggf. farbigen Warnhinweises, etc.

Wird als Randmarkierung eine durchgezogene Linie erkannt, beispielsweise eine durchgezogene Mittellinie oder Randlinie, so wird bei drohendem Überschreiten dieser Randlinien eine Warnung ausgegeben bzw. eine Reaktion vorgenommen. Bei gestrichelten Linien, beispielsweise bei gestrichelten Mittellinien ,wird in einem bevorzugten Ausführungsbeispiel keine Warnung bzw. keine Reaktion erzeugt. In einer anderen Ausführung erfolgt in diesem Fall eine unauffälliger gestaltete Warnung, z.B. leise Töne, kleinere optische Darstellung, weniger auffällige Farben, etc.

Ergibt die Beobachtung der Nachbarspur keine Information über die Fahrtrichtung auf der Nachbarspur, wird keine (unauffälligere) Warnung bzw. keine Reaktion erzeugt. Ist die Fahrtrichtung des Verkehrs auf der Nachbarspur bekannt, wird keine Warnung ausgegeben bzw. die Warnung unauffällig gestaltet, wenn der Fahrer in eine Fahrspur mit Verkehr in gleicher Fahrtrichtung wechselt. Wechselt er in eine Spur mit Gegenverkehr, wird eine Warnung ausgegeben. Der Fahrzeugeingriff (Reaktion) findet in einem Falle statt, im anderen nicht.

In einem anderen Ausführungsbeispiel wird aus den vorliegenden Informationen eines Navigationssystems ermittelt, ob sich das Fahrzeug auf einer Straße befindet, bei der die betroffene Nachbarspur von Fahrzeugen benutzt wird, die in dieselbe Fahrtrichtung fahren oder die Gegenverkehr darstellen.

In einer weiteren Ausführung wird bei durchgezogenen Linie immer gewarnt, bei gestrichelten nur dann, wenn die Nachbarfahrspur als Fahrspur für den Gegenverkehr erkannt wurde.

In einer nicht beanspruchten Alternative kann je nach Ausführungsbeispiel und Sensorausrüstung vorgesehen sein, dass bei gestrichelten Linie eine Warnung ausgegeben wird, wenn über die Sensorik tatsächlich vorhandene Objekte auf der Nachbarfahrspur in gleicher Fahrtrichtung in der Nähe des Fahrzeugs erkannt sind.

In einem Ausführungsbeispiel wird eine einmal erkannte Fahrsituation solange angenommen, bis eine andere Information vorliegt. Wird beispielsweise erkannt, dass das Fahrzeug auf einer Fahrbahn mit Gegenverkehr unterwegs ist, so wird eine Fahrbahn mit Verkehr in gleicher Fahrtrichtung erst dann angenommen, wenn dies zuverlässig erkannt wird. Entsprechendes gilt für das Erkennen einer Fahrsituation mit Gegenverkehr.

Wird eine Warnung unterdrückt und wird gleichzeitig erkannt, dass das Fahrzeug voraussichtlich die Fahrspur verlässt, so wird in einem bevorzugten Ausführungsbeispiel in dieser Situation dem Fahrer als unauffälligere Information automatisch ein Blinkergeräusch angezeigt.

In einem bevorzugten Ausführungsbeispiel wird ferner in dieser Situation der entsprechende Blinker eingeschaltet, um andere Verkehrsteilnehmer zu informieren.

Die oben beschriebene Vorgehensweise wird mittels Programmen realisiert, die im Mikrocomputer 14 implementiert sind. Dieser erzeugt mit Hilfe der Programme und nach Maßgabe der zugeführten Eingangssignale die Ausgangssignale zur Warnung/Fahrzeugeingriff. Nachfolgend wird anhand eines Flussdiagramms ein bevorzugtes Ausführungsbeispiel der oben dargestellten Vorgehensweise dargestellt.

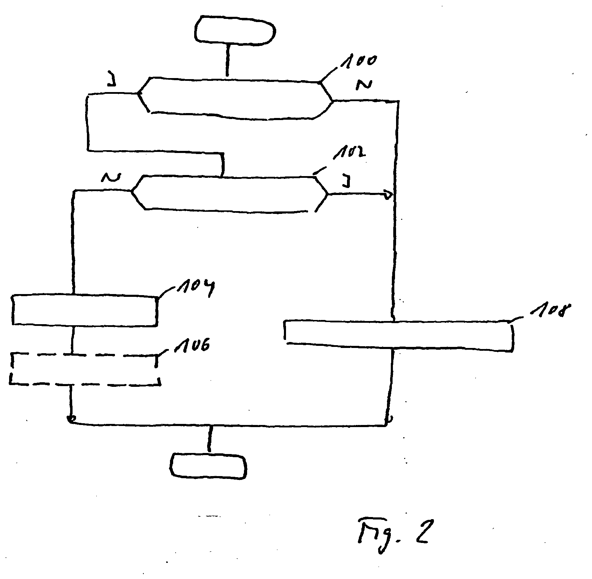

Das in Figur 2 dargestellte Programm wird durchlaufen, wenn erkannt wurde, dass die Gefahr besteht, dass das Fahrzeug seine Fahrspur verlässt. Im ersten Schritt 100 wird festgestellt, ob die Markierung, deren Überschreiten droht, eine durchgezogene oder eine gestrichelte Linie ist. Dies erfolgt auf der Basis einer entsprechenden Information von der Bildauswerteeinheit. Ist die Randmarkierung durchgezogen, so erfolgt gemäß Schritt 108 eine Fahrerwamung/Fahrzeugeingriff, beispielsweise durch akustische und/oder optische und/oder haptische Warnung bzw. durch Eingriff in die Fahrzeuglenkung. Wurde im Schritt 100 jedoch erkannt, dass die Fahrbahnmarkierung, deren Überschreiten droht, eine gestrichelte Linie ist, wird im Schritt 102 die Verkehrssituation bezüglich der Nachbarfahrspur, auf die gewechselt werden könnte, überprüft. Wie oben dargestellt wird anhand eines Relativgeschwindigkeitssignals überprüft, ob der sich auf der Nachbarfahrspur bewegende Verkehr in gleicher Fahrtrichtung oder in entgegengesetzter Fahrtrichtung unterwegs ist. Dabei wird eine Marke gesetzt, wenn ggf. mehrmals hintereinander Objekte auf der betroffenen Nachbarfahrspur erkannt worden sind, die entgegenkommen. Ist die Marke gesetzt, so folgt Schritt 108 mit einer Fahrerwarnung/Fahrzeugeingriff. Die Marke wird zurückgesetzt, wenn sicher (d.h. z.B. mehrmals hintereinander) erkannt wurde, dass auf der Nachbarfahrspur Objekte in gleicher Richtung fahren. Ist die Marke zurückgesetzt wird im Schritt 104 keine Wamung/Fahrzeugeingriff vorgenommen, in einer Ausführung automatisch ein Blinkergeräusch erzeugt oder ein optisches Zeichen gegeben. Optional wird dann im Schritt 106 der entsprechende Blinker eingeschaltet, um andere Verkehrsteilnehmer zu informieren. Nach Schritt 106 bzw. 108 wird das Programm wieder mit der Ermittlung der Gefahr des Überschreitens einer Randmarkierung fortgesetzt.

In zur Erfindung alternativen Ausführungen wird bei erkannter gestrichelter Linie und Verkehr in Fahrtrichtung eine Warnung dann erzeugt, wenn in der Nähe des Fahrzeugs ein Objekt erkannt wurde, und/oder bei Gegenverkehr, wenn tatsächlich ein entgegenkommendes Fahrzeug erkannt wird. Im letzten Fall wird eine unauffälligere oder keine Warnung ausgegeben, wenn die Nachbarfahrspur zwar für den Gegenverkehr ist, aber kein konkreter Gegenverkehr erkannt wurde.

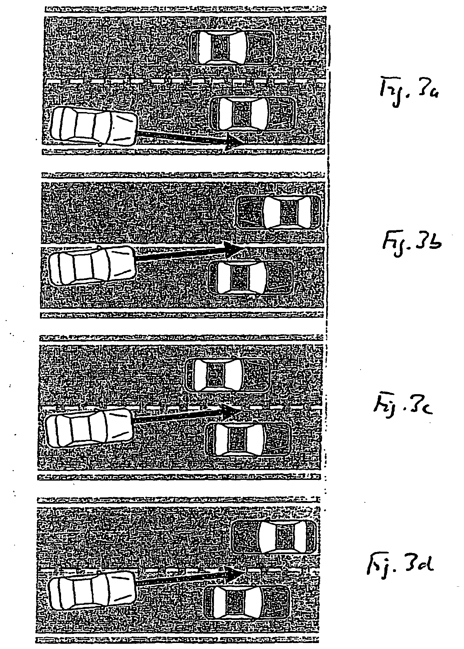

In Figur 3 sind verschiedene Fahrsituationen dargestellt, in denen bei Verlassen der Fahrspur bzw. bei drohendem Verlassen der Fahrspur eine Fahrerwarnung erfolgt oder nicht. In den Figuren 3a und 3b droht das Überschreiten einer durchgezogenen Linie, so dass hier unabhängig von der Fahrsituation eine Warnung erfolgt. In den Figuren 3c und 3d droht das Überschreiten einer gestrichelten Linie. In diesem Fall erfolgt wie oben dargestellt eine Warnung dann, wenn auf der Nachbarfahrspur Gegenverkehr ist oder Gegenverkehr zur erwarten ist. Diese Situation ist in Figur 3d geschildert, in der also eine Fahrerwarnung erfolgt. In Figur 3c dagegen fährt das Fahrzeug auf der Nachbarfahrspur in gleicher Richtung, so dass hier auf eine Warnung verzichtet bzw. die Warnung unauffälliger (leiser, Blinkergeräusch, kleiner, etc.) dargestellt wird.

In einer weiteren Ausführungsform wird die Warnung verzögert oder mit geringerer Intensität vorgenommen, wenn das Fahrzeug eine Linie überfährt in Richtung einer Spur, die z.B. von Informationen eines Navigationssystems als Standspur bekannt ist.

## Patentansprüche

1. Verfahren zur Fahrerinformation bzw. zu einem Fahrzeugeingriff bei Verlassen der Fahrspur, wobei die Fahrerinformation und/oder der Fahrzeugeingriff erfolgt, wenn das Fahrzeug die Fahrspur zu verlassen droht, wobei wenigstens eine Begrenzung der Fahrspur erfasst wird, wobei
die Fahrerwarnung bzw. der Fahrzeugeingriff dann erfolgt, wenn auf der Nachbarfahrspur, in die das Fahrzeug möglicherweise einfährt, Gegenverkehr zu erwarten ist, mit den Schritten:
- Erkennen der Art der Fahrbahnmarkierung
- Warnen des Fahrers bzw. Eingreifen in das Fahrzeug bei gestrichelter Fahrbahnmarkierung nur dann, wenn die Nachbarfahrspur als Fahrspur für den Gegenverkehr erkannt wurde.

2. Verfahren nach einem der vorhergehenden Ansprüche, **dadurch gekennzeichnet, dass** die Warnung bzw. der Fahrzeugeingriff erfolgt, wenn die Begrenzungsmarkierung der Fahrspur eine durchgezogene Fahrbahnmarkierung ist.

3. Verfahren nach einem der vorhergehenden Ansprüche, **dadurch gekennzeichnet, dass** eine Fahrerwarnung bzw. ein Fahrzeugeingriff nicht oder unauffälliger erfolgt, wenn die Begrenzungsmarkierung der Fahrspur eine gestrichelte Fahrbahnmarkierung ist und die Nachbarfahrspur nicht als Fahrspur für den Gegenverkehr erkannt wurde.

4. Verfahren nach einem der vorhergehenden Ansprüche, **dadurch gekennzeichnet, dass** eine Fahrerwarnung bzw. ein Fahrzeugeingriff zeitlich verzögert oder mit geringerer Intensität erfolgt, wenn die Nachbarfahrspur, in die das Fahrzeug möglicherweise einfahrt, ein Standstreifen ist.

5. Verfahren nach einem der vorhergehenden Ansprüche, **dadurch gekennzeichnet, dass** eine unauffälligere Warnung dadurch erfolgt, dass ein Blinkergeräusch und/_oder eine akustische Warnung mit leiseren Tönen und/oder eine kleinere bzw. unauffälligere optische Anzeige erfolgt.

6. Verfahren nach Anspruch 3, **dadurch gekennzeichnet, dass** bei unterdrückter bzw. unauffälliger Fahrerwarnung ein Ansteuern des entsprechenden Blinkers zur Information anderer Verkehrsteilnehmer erfolgt.

7. Vorrichtung zur Fahrerinformation bzw. zu einem Fahrzeugeingriff bei Verlassen der Fahrspur, mit einer Auswerteeinheit, welche bei drohendem Verlassen der Fahrspur eine Warnung des Fahrers und/oder einen Fahrzeugeingriff aktiviert, mit einem Mikrocomputer, welcher ein Programm umfasst, welches wenigstens eine Begrenzungsmarkierung der Fahrspur erfasst, **dadurch gekennzeichnet, dass** die Fahrerwarnung bzw. der Fahrzeugeingriff dann erfolgt, wenn auf der Nachbarfahrspur, in die das Fahrzeug möglicherweise einfährt, Gegenverkehr zu erwarten ist, wobei die Vorrichtung Mittel umfasst zum:
- Erkennen der Art der Fahrbahnmarkierung
- Warnen des Fahrers bzw. Eingreifen in das Fahrzeug bei gestrichelter Fahrbahnmarkierung nur dann, wenn die Nachbarfahrspur als Fahrspur für den Gegenverkehr erkannt wurde.

## Claims

1. Method for providing a driver with information or for bringing about a vehicle intervention on leaving the lane, wherein the driver is provided with information and/or the vehicle intervention takes place if the vehicle threatens to leave the lane, wherein at least one boundary of the lane is sensed, wherein
the warning to the driver or the vehicle intervention takes place if oncoming traffic can be expected on the adjacent lane onto which the vehicle is possibly driving, comprising the steps:
- detecting the type of carriageway marking,
- warning the driver or intervening in the vehicle in the case of an interrupted carriageway marking only if the adjacent lane has been detected as a lane for oncoming traffic.

2. Method according to one of the preceding claims, **characterized in that** the warning or the vehicle intervention takes place if the boundary marking of the lane is an uninterrupted carriageway marking.

3. Method according to one of the preceding claims, **characterized in that** the driver is not warned and/or a vehicle intervention does not take place, or takes place in a less conspicuous way, if the boundary marking of the lane is an interrupted carriageway marking and the adjacent lane has not been detected as a lane for oncoming traffic.

4. Method according to one of the preceding claims, **characterized in that** a warning to the driver or an intervention in the vehicle takes place with a time delay or with lower intensity if the adjacent lane onto which the vehicle is possibly driving is a hard shoulder.

5. Method according to one of the preceding claims, **characterized in that** a less conspicuous warning takes place as a result of the fact that a flashing indicator lamp noise and/or an acoustic warning with soft sounds and/or a relatively small or less conspicuous visual display is provided.

6. Method according to Claim 3, **characterized in that** if the warning to the driver is suppressed or less conspicuous the corresponding flashing indicator lamp is actuated to provide information to other road users.

7. Device for providing a driver with information or for bringing about a vehicle intervention on leaving the lane, having an evaluation unit which, when the vehicle threatens to leave the lane, activates a warning to the driver and/or vehicle intervention, having a microcomputer which comprises a program which senses at least one boundary marking of the lane, **characterized in that** the driver warning or the vehicle intervention takes place if oncoming traffic can be expected on the adjacent lane onto which the vehicle is possibly driving, wherein the device comprises means for:
- detecting the type of carriageway marking,
- warning the driver or intervening in the vehicle in the case of an interrupted carriageway marking only if the adjacent lane has been detected as a lane for oncoming traffic.

## Revendications

1. Procédé d'information du conducteur ou d'action sur le véhicule au cas où il quitterait la trace de circulation, l'information du conducteur et/ou l'action sur le véhicule étant une action sur le véhicule risquant de quitter la trace de circulation, selon lequel on saisit au moins une limitation de la trace de circulation, dans lequel
l'avertissement du conducteur ou l'action sur le véhicule se fait lorsque la voie de circulation voisine dans laquelle le véhicule risque de passer est autorisée à la circulation en sens opposé, comprenant les étapes suivantes :
- reconnaître le type de marquage de voie de circulation
- avertir le conducteur ou agir sur le véhicule lorsque le marquage de voie de circulation est discontinu seulement si la voie de circulation voisine a été reconnue en tant que voie de circulation pour la circulation en sens opposé.

2. Procédé selon l'une des revendications précédentes, **caractérisé en ce que** l'avertissement ou l'action sur le véhicule a lieu si le marquage de limitation de la voie de circulation est un marquage de voie de circulation par une ligne continue.

3. Procédé selon l'une des revendications précédentes, **caractérisé en ce que** si le marquage de limitation de la voie de circulation est une ligne discontinue et la voie de circulation voisine n'a pas été reconnue en tant que voie de circulation pour la circulation en sens opposé, un avertissement du conducteur ou une action sur le véhicule ne se fait pas ou seulement de manière non perceptible.

4. Procédé selon l'une des revendications précédentes, **caractérisé en ce qu'**un avertissement du conducteur ou une action sur le véhicule se fait de manière temporisée ou avec une intensité plus faible si la voie de circulation voisine dans laquelle circule éventuellement le véhicule est une bande d'arrêt d'urgence.

5. Procédé selon l'une des revendications précédentes, **caractérisé en ce qu'**un avertissement moins perceptible est effectué par un bruit de clignotant et/ou un avertissement acoustique avec des sons plus doux et/ou un affichage optique réduit ou plus imperceptible.

6. Procédé selon la revendication 3, **caractérisé en ce qu'**en cas d'avertissement du conducteur, neutralisé ou imperceptible, le clignotant correspondant est commandé pour informer les autres participants de la circulation.

7. Dispositif d'information du conducteur ou d'action sur le véhicule en cas de sortie de la voie de circulation, comportant une unité d'exploitation qui en cas de risque de sortie de la voie de circulation, active un avertissement pour le conducteur et/ou une action sur le véhicule, comprenant un micro-ordinateur ayant un programme qui saisit au moins un marquage de limitation de la voie de circulation, **caractérisé en ce que** l'avertissement du conducteur ou l'action sur le véhicule se fait si sur la voie de circulation voisine, une circulation en sens opposé est prévisible, voie sur laquelle le véhicule risque de passer, le dispositif comprenant des moyens pour :
- reconnaître le type de marquage de voie de circulation
- avertir le conducteur ou agir sur le véhicule lorsque le marquage de voie de circulation est discontinu seulement si la voie de circulation voisine a été reconnue en tant que voie de circulation pour la circulation en sens opposé.
